Europäisches Patentamt

European Patent Office

Office européen des brevets

(19)

(11) **EP 0 804 716 B1**

(12) **EUROPÄISCHE PATENTSCHRIFT**

(45) Veröffentlichungstag und Bekanntmachung des Hinweises auf die Patenterteilung:
**31.03.2004 Patentblatt 2004/14**

(21) Anmeldenummer: **96927599.9**

(22) Anmeldetag: **25.07.1996**

(51) Int Cl.$^7$: **G01D 5/38**

(86) Internationale Anmeldenummer:
**PCT/EP1996/003276**

(87) Internationale Veröffentlichungsnummer:
**WO 1997/005457 (13.02.1997 Gazette 1997/08)**

(54) **FOTOELEKTRISCHES WEG- UND WINKELMESSSYSTEM ZUM MESSEN DER VERSCHIEBUNG ZWEIER OBJEKTE ZUEINANDER**

PHOTO-ELECTRIC DISTANCE- AND ANGLE-MEASUREMENT SYSTEM FOR MEASURING THE DISPLACEMENT OF TWO OBJECTS WITH RESPECT TO EACH OTHER

SYSTEME PHOTOELECTRIQUE DE MESURE DE DISTANCE ET D'ANGLE DESTINE A MESURER LE DEPLACEMENT DE DEUX OBJETS L'UN PAR RAPPORT A L'AUTRE

(84) Benannte Vertragsstaaten:
**AT CH DE GB IT LI**

(30) Priorität: **26.07.1995 DE 19527287**

(43) Veröffentlichungstag der Anmeldung:
**05.11.1997 Patentblatt 1997/45**

(73) Patentinhaber: **Dr. Johannes Heidenhain GmbH 83301 Traunreut (DE)**

(72) Erfinder:
• **BURGSCHAT, Reiner**
 **D-07745 Jena (DE)**
• **WILLHELM, Jörg**
 **D-35580 Wetzlar (DE)**

(56) Entgegenhaltungen:
**EP-A- 0 297 482**    **WO-A-91/03712**
**CH-A- 498 373**    **DE-A- 1 904 532**
**DE-A- 3 904 898**    **DE-A- 3 942 178**
**DE-A- 4 328 525**    **FR-A- 1 316 062**

EP 0 804 716 B1

**Beschreibung**

Die Erfindung bezieht sich auf ein fotoelektrisches Weg- und Winkelmeßsystem zum Messen der Verschiebung zweier Objekte zueinander und ist beispielsweise für die Anwendung in Wegund Winkelmeßsystemen geeignet.

Aus dem Stand der Technik sind Weg- und Winkelmeßsysteme nach den unterschiedlichsten Bauformen bekannt. In der Regel ist den Meßsystemen gemeinsam, daß ein in mehrere Felder geteiltes Referenzgitter über dem Maßstab oder der Kreisteilung angeordnet und die Teilung in den Feldern um jeweils 1/4 oder 1/3 der Teilungsperiode gegeneinander verschoben ist. Die den Feldern des Referenzgitters zugeordneten fotoelektrischen Detektoren liefern um 90° bzw. 120° phasenverschobene Signale, die in einer geeigneten Elektronik die Maßstabverschiebung oder Teilkreisdrehung richtungsabhängig erfassen.

So ist in der DE-C- 3904898 ein "Optischer Kodierer" beschrieben, der eine unkollimierte Lichtquelle, ein Referenzgitter zwischen Lichtquelle und Maßstabsgitter sowie ein Referenzgitter zwischen Fotoempfänger und Maßstabsgitter verwendet. Die beiden Referenzgitter liegen in einer Ebene. Das Referenzgitter zwischen den Fotoempfängern und dem Maßstabsgitter ist in mehrere Felder unterteilt. Die Gitterteilungen in den Feldern sind jeweils um je 1/4 der Teilungsperiode zueinander verschoben. Die den Referenzfeldern zugeordneten Fotoempfänger detektieren Signale mit Phasenlagen von 0°, 90°, 180° und 270°.

Dieser beschriebene Dreigittergeber ist aber empfindlich bei Verdrehung und Abstandsänderung des Meßkopfes zum Maßstab in bezug auf die Phasenlage der Empfängersignale.

Des weiteren ist eine Einrichtung zur Messung von Verschiebungen und Verdrehungen eines Körpers bekannt geworden, die matrixförmige Empfängeranordnungen verwenden, wobei die Referenzgitterfelder mit phasenverschobenen Gitterlinien zugeordnet sind und die statistisch zur Kompensation von Amplituden-, Phasen- und Teilungsfehlern zusammengeschaltet werden.

Diese Anordnung ist besonders für Durchlichtmeßsysteme mit kollimierter Beleuchtung geeignet, erfordert aber einen relativ hohen Fertigungsaufwand.

Die DE-A-3 942 178 veröffentlicht ein System gemäß dem Oberbegriff des vorliegenden Anspruchs 1.

Ausgehend von dem geschilderten Stand der Technik liegt der Erfindung die Aufgabe zugrunde, ein fotoelektrisches Weg- und Winkelmeßsystem zum Messen der Verschiebung zweier Objekte zueinander zur Verfügung zu stellen, das unempfindlich gegenüber Abstandsänderungen und Verdrehungen des Meßkopfes gegenüber dem Maßstab ist und zugleich einen sehr einfachen und kostengünstigen Aufbau ermöglicht.

Diese Aufgabe wird erfindungsgemäß bei einem gattungsgemäßen fotoelektrischen Weg- und Winkelmeßsystem gemäß vorliegendem Anspruch 1 gelöst.

Bevorzugte Weiterbildungen des erfindungsgemäßen fotoelektrischen Weg- und Winkelmeßsystem sind in den vorliegenden Unteransprüchen beansprucht.

Mit der erfindungsgemäßen Lösung wird dem Anwender ein fotoelektrisches Weg- und Winkelmeßsystem zur Verfügung gestellt, mit dem ein einfacher und kostengünstiger Aufbau realisiert wird, der zugleich relativ unempfindlich gegenüber Abstandsänderungen und Verdrehungen des Meßkopfes gegenüber dem Maßstab ist.

Die Erfindung soll nachstehend anhand einer Prinzipdarstellung noch näher erläutert werden.
Es zeigen:

Fig. 1: eine Prinzipdarstellung der erfindungsgemäßen Anordnung, und

Fig. 2: eine Ausführungsform des Aufbaus der erfindungsgemäßen Anordnung

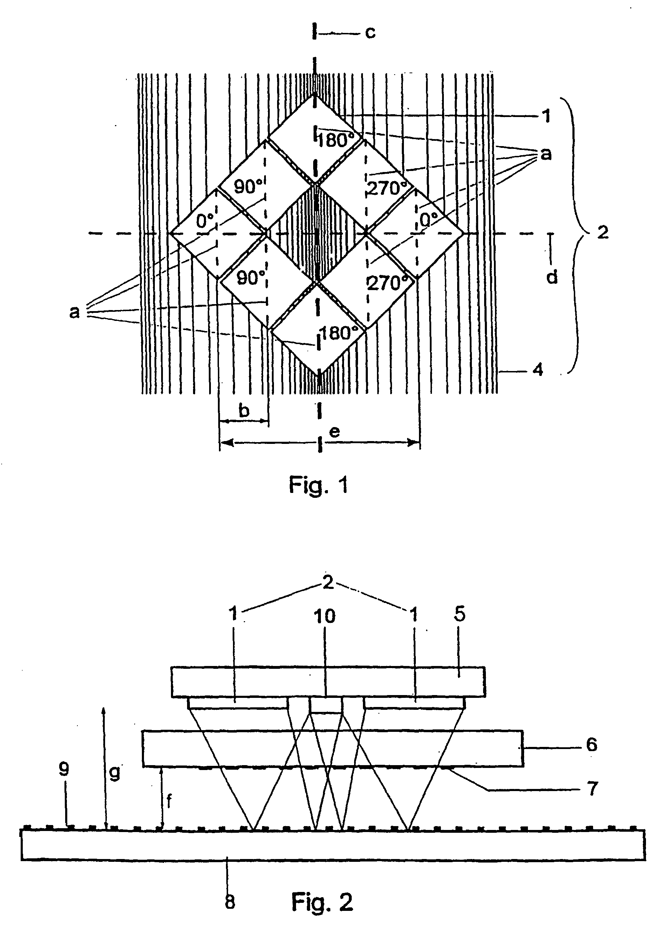

Die in Fig. 1 schematisch dargestellte Anordnung zeigt eine Fotoempfängermatrix 2, die aus einer Anzahl N = n . 4 aufgebauten Fotoempfänger 1 besteht, wobei N die Anzahl der Fotoempfänger und n eine gerade Zahl ≥ 2 bedeuten.

Vorteilhafte Anordnungen ergeben sich aber aus dem Aufbau einer Fotoempfängermatrix 2 mit 8, 24 oder 48 Fotoempfängern 1.

Die Fotoempfänger 1 sind schachbrettartig in einem Quadrat oder Rhombus angeordnet, wobei sich in der Mitte kein Fotoempfänger 1 befindet.
Zur Verdeutlichung der Funktionsweise ist ein optisches Streifenbild 4 hinterlegt (Fig.1), das z.B. als Moire durch Verdrehen des Referenzgitters gegenüber dem Maßstabsgitter um einen Winkel α im Bereich 10° > α > 0° gewonnen wird.

Die Diagonale a, der Fotoempfänger 1 und die Diagonale der Fotoempfängermatrix 2 liegen parallel zu dem optischen Streifenbild 4.

Alle Fotoempfänger 1, mit gleicher dargestellter Phasenlage, deren Diagonale parallel zur Bezugsachse c verlaufen, ergeben eine Parallelenschar. Diese parallelen Fotoempfänger detektieren Signale mit + 90° oder - 90° Phasenverschiebung, je nachdem, ob es die Fotompfänger der rechten oder linken benachbarten Parallele der Diagonale a im Abstand b sind.

Somit ist beispielsweise das Fotoempfängerpaar 90°, die für die Phasenlage 90° verantwortlich sind (dargestellt als Fotoempfänger mit 90°) elektrisch miteinander verbunden.

Alle Fotoempfänger 1, die Signale mit gleicher Phase detektieren, werden in der Fotoempfängermatrix 2 oder in einer Auswerteschaltung zusammengefaßt und es ergeben sich somit vier Signale, die jeweils zueinander 90° phasenverschoben sind.

Durch die Anordnung der Fotoempfänger 1 in der Fotoempfängermatrix 2 ist immer gewährleistet, daß zur Bildung eines Signales die gleiche Anzahl Fotoempfänger 1 beitragen und damit die Amplitude der vier Signale gleich ist. Der Abstand e der Fotoempfänger 1, die auf der orthogonalen Diagonalen (3) zur Bezugsachse c der Fotoempfängermatrix 2 Signale mit gleicher Phasenlage detektieren, bestimmt den optischen Streifenabstand der Moire- oder Interferenzstreifen.

Die vorstehend beschriebene Anordnung der Fotoempfängermatrix hat eine hochgradig phasenkompensierende Wirkung. Eine Verdrehung des optischen Streifenbildes zur Fotoempfängermatrix hat keine Phasenänderung der Signale zur Folge, lediglich die Amplitude der Signale verändert sich. Eine Veränderung des optischen Streifenabstandes bewirkt auch keine Phasenfehler der Signale, sondern nur eine Amplitudenänderung.

Dies ist für eine Interpolation der Signale von Bedeutung, da bei üblichen Interpolationsverfahren zur Auflösungserhöhung der Meßsysteme die Amplitudenänderungen der Signale nur unbedeutenden Einfluß auf die Meßgenauigkeit haben, aber Phasen- und Offsetfehler der Signale in hohem Maße die Meßgenauigkeit beeinträchtigen.

Die Fig. 2 zeigt eine schematische Ausführungsform des Aufbaus des erfindungsgemäßen fotoelektrischen Weg- und Winkelmeßsystems.

In dieser Schnittdarstellung sind die Fotoempfänger 1 der Fotoempfängermatrix 2 in einer Ebene mit der Lichtquelle 10 angeordnet. Die Lichtquelle 10, die z.B. als LED ausgebildet ist, strahlt diffuses Licht mit der Wellenlänge $\lambda$ ab.

Das Licht der LED fällt auf ein Referenzgitter 7 mit einer Gitterkonstanten g 2, das sich auf einem Trägersubstrat 6, z.B. Glas, befindet. Im Abstand f zu diesem Referenzgitter 7 ist ein Maßstabsgitter 9, das auf einem Maßstab 8 aufgebracht ist, angeordnet. Das Maßstabsgitter 9 ist ein Amplitudengitter oder ein Reflexionsgitter mit der Gitterkonstanten g 1.

Der Abstand f ergibt sich aus den Gitterkonstanten g 1 und g 2, der Lichtwellenlänge $\lambda$ der Lichtquelle 10, dem Fotoempfängerabstand e und dem Abstand g der Fotoempfängermatrix 2 und der Lichtquelle 10 zum Maßstabsgitter 9 nach folgender Beziehung:

$$f = \frac{g\,1 \cdot g\,2}{\lambda} \cdot \cos\left(\arctan\frac{e}{4\,g}\right).$$

Das reflektierte Licht vom Maßstabsgitter 9 passiert noch einmal das Referenzgitter 7 und fällt auf die Fotoempfänger 1. Das Referenzgitter 7 ist ein durchgehend stetig geteiltes Gitter. Die Gitterkonstante g 2 ist vorzugsweise um den Faktor 2 größer als die Gitterkonstante g 1, um einen hohen Wirkungsgrad zu erhalten. Das Referenzgitter 7 und das Maßstabsgitter 9 werden zur Erzeugung eines optischen Streifenbildes 4 gegeneinander um einen Winkel $\alpha$ verdreht. Der Winkel $\alpha$ ergibt sich aus der Gitterkonstanten g 1 und dem Fotoempfängerabstand e nach der Funktion :

$$\alpha = \arctan\frac{g\,1}{e}$$

Dieser Drehwinkel $\alpha$ läßt sich auch gleich bei der Teilung des Referenzgitters 7 berücksichtigen.

## Patentansprüche

1. Fotoelektrisches Weg- und Winkelmeßsystem zum Messen der Relativverschiebung zweier Objekte zueinander, mit einer Lichtquelle, einem Referenzgitter und einem Maßstabsgitter zur Erzeugung eines optischen Streifenbildes, mit Fotoempfängern und mit einer Auswerteschaltung, wobei eine Anzahl von Fotoempfängern entsprechend N=n · 4 vorgesehen ist, worin N die Anzahl der Fotoempfänger und n eine gerade Zahl $\geq 2$ bezeichnen, und wobei durch die Flächenschwerpunkte aller Fotoempfänger verlaufende Diagonale parallel zueinander liegen und Fotoempfänger gleicher Phasenlage elektrisch miteinander verbunden sind, **dadurch gekennzeichnet, daß** die parallel zueinander verlaufenden Diagonalen (a) auch parallel zu den Streifen (4) des optischen Streifenbildes angeordnet sind und jeweils durch die Flächenschwerpunkte von Fotoempfängern (1) verlaufen, die Signale gleicher Phasenlage detektieren, wobei jeweils zwei nebeneinander liegende Diagonale (a) einen gleichen Abstand (b) zueinander aufweisen und die ihnen zugeordneten Fotoempfänger (1) zueinander um eine Phasenlage von 90° versetzte Signale detektieren.

2. Fotoelektrisches Weg- und Winkelmeßsystem nach Anspruch 1, **dadurch gekennzeichnet, daß** das optische Streifenbild (4) durch Einstellen eines Winkels $\alpha$ zwischen dem Referenzgitter (7) und dem Maßstabsgitter (9) erzeugt wird, wobei 10° > $\alpha$ > 0° ist.

3. Fotoelektrisches Weg- und Winkelmeßsystem nach Anspruch 1 oder Anspruch 2, **dadurch gekennzeichnet, daß** die Fotoempfänger (1) in Form einer Fotoempfängermatrix (2) angeordnet sind.

4. Fotoelektrisches Weg- und Winkelmeßsystem nach Anspruch 3, **dadurch gekennzeichnet, daß** in der Mitte der Fotoempfängermatrix (2) die Lichtquelle (10) angeordnet ist.

5. Fotoelektrisches Weg- und Winkelmeßsystem nach einem der Ansprüche 1 bis 4, **dadurch gekennzeichnet, daß** die Lichtquelle (10) in der Ebene der Fotoempfänger (1) angeordnet ist.

6. Fotoelektrisches Weg- und Winkelmeßsystem nach einem der Ansprüche 1 bis 4, **dadurch ge-**

**kennzeichnet, daß** die Lichtquelle (10) auf der Fotoempfängermatrix (2) aufgesetzt angeordnet ist.

7. Fotoelektrisches Weg- und Winkelmeßsystem nach einem der Ansprüche 3, 4 oder 6, **dadurch gekennzeichnet, daß** die Fotoempfänger (1) in der Fotoempfängermatrix (2) in Form eines Quadrates oder eines Rhombus angeordnet sind, wobei sich jeweils in der Mitte kein Fotoempfänger (1) befindet.

8. Fotoelektrisches Weg- und Winkelmeßsystem nach einem der Ansprüche 1 bis 7, **dadurch gekennzeichnet, daß** das Referenzgitter (7) gegenüber dem Maßstabsgitter (9) mindestens die zweifache Teilungsperiode (T) aufweist.

## Claims

1. Photoelectric path- and angle-measurement system for measuring the displacement of two objects relative to one another, having a light source, a reference grating and a scale grating for generating an optical fringe pattern, having photoreceivers and having an evaluating circuit, a quantity of photoreceivers corresponding to $N = n \cdot 4$ being provided, where N is the quantity of photoreceivers and n is an even number $\geq 2$, and wherein diagonals passing through the centroids of all the photoreceivers are parallel to one another, and photoreceivers of the same phase position are electrically connected to one another, **characterised in that** the diagonals (a) extending parallel to one another are also arranged parallel to the fringes (4) of the optical fringe pattern, and in each case extend through the centroids of photoreceivers (1) which detect signals of the same phase position, every two adjacent diagonals (a) having the same spacing (b) from one another, and the photoreceivers (1) associated with them detecting signals which are out of phase by 90° relative to one another.

2. Photoelectric path- and angle-measurement system according to claim 1, **characterised in that** the optical fringe pattern (4) is produced by adjusting an angle $\alpha$ between the reference grating (7) and the scale grating (9), where $\alpha$ is greater than 0° and less than 10°.

3. Photoelectric path- and angle-measurement system according to claim 1 or claim 2, **characterised in that** the photoreceivers (1) are arranged in the form of a photoreceiver matrix (2).

4. Photoelectric path- and angle-measurement system according to claim 3, **characterised in that** the light source (10) is arranged in the centre of the photoreceiver matrix (2).

5. Photoelectric path- and angle-measurement system according to one of claims 1 to 4, **characterised in that** the light source (10) is arranged in the plane of the photoreceivers (1).

6. Photoelectric path- and angle-measurement system according to one of claims 1 to 4, **characterised in that** the light source (10) is arranged so as to be placed on the photoreceiver matrix (2).

7. Photoelectric path- and angle-measurement system according to one of claims 3, 4 or 6, **characterised in that** the photoreceivers (1) are arranged in the photoreceiver matrix (2) in the form of a square or a rhombus, there being in each case no photoreceiver (1) in the centre.

8. Photoelectric path- and angle-measurement system according to one of claims 1 to 7, **characterised in that** the reference grating (7) has at least twice the number of division periods (T) compared with the scale grating (9).

## Revendications

1. Système de mesure de distance et d'angles pour la mesure du déplacement relatif de deux objets l'un par rapport à l'autre, avec une source de lumière, un réseau de référence et un réseau de règle pour produire une image optique formée de raies, avec des photodétecteurs ainsi qu'un circuit d'exploitation, une quantité de photodétecteurs N=n.4 étant prévue, N étant le nombre de photodétecteurs et n étant un nombre pair $\geq 2$, les diagonales passant par les centres de gravité des surfaces de tous les photodétecteurs (1) étant mutuellement parallèles et les photodétecteurs de même phase étant connectés électriquement entre eux, **caractérisé en ce que** les diagonales (a) mutuellement parallèles sont également parallèles aux raies (4) de l'image optique formée de raies et passent chaque fois par les centres de gravité des surfaces de photodétecteurs (1) qui détectent des signaux de même phase, deux diagonales (a) disposées l'une à côté de l'autre présentant une distance (b) réciproque constante et les photodétecteurs (1) associés à celles-ci détectant des signaux mutuellement déphasés de 90°.

2. Système de mesure de distance et d'angles selon la revendication 1, **caractérisé en ce que** l'image optique formée de barres (4) est produite par réglage d'un angle $\alpha$ entre le réseau de référence (7) et le réseau formant règle graduée (9), $10° > \alpha > 0°$.

3. Système de mesure de distance et d'angles selon la revendication 1 ou la revendication 2, **caractéri-**

**sé en ce que** les photodétecteurs (1) sont disposés sous la forme d'une matrice (2) de photodétecteurs.

4. Système de mesure de distance et d'angles selon la revendication 3, **caractérisé en ce que** la source de lumière (10) est disposée au centre de la matrice (2) de photodétecteurs.

5. Système de mesure de distance et d'angles selon une des revendications 1 à 4, **caractérisé en ce que** la source de lumière (10) est disposée dans le plan des photodétecteurs (1).

6. Système de mesure de distance et d'angles selon une des revendications 1 à 4, **caractérisé en ce que** la source de lumière (10) est placée sur la matrice (2) de photodétecteurs.

7. Système de mesure de distance et d'angles selon une des revendications 3, 4 ou 6, **caractérisé en ce que** les photodétecteurs (1) dans la matrice (2) de photodétecteurs sont disposés en forme de carré ou de losange, aucun photodétecteur n'étant placé au centre.

8. Système de mesure de distance et d'angles selon une des revendications 1 à 7, **caractérisé en ce que** le réseau de référence (7) par rapport au réseau formant règle graduée (9) présente une période de division (T) au moins double.

Fig. 1

Fig. 2